## Europäisches Patentamt
## European Patent Office
## Office européen des brevets

(19)

(11) Veröffentlichungsnummer: **0 019 174**
A2

(12)

# EUROPÄISCHE PATENTANMELDUNG

(21) Anmeldenummer: 80102420.9

(22) Anmeldetag: 05.05.80

(51) Int. Cl.³: **B 01 J 23/22**
B 01 J 37/02, B 01 J 37/00
C 01 B 17/79

(30) Priorität: 16.05.79 DE 2919662

(43) Veröffentlichungstag der Anmeldung:
26.11.80 Patentblatt 80/24

(84) Benannte Vertragsstaaten:
AT BE CH DE FR GB IT LI LU NL SE

(71) Anmelder: BASF Aktiengesellschaft
Carl-Bosch-Strasse 38
D-6700 Ludwigshafen(DE)

(72) Erfinder: Appl, Max, Dr.
Danziger Strasse 9
D-6701 Dannstadt-Schauernheim 1(DE)

(72) Erfinder: Zirker, Guenter, Dr.
Schelmenzeile 78
D-6700 Ludwigshafen(DE)

(72) Erfinder: Triebskorn, Bruno, Dr.
Mohnstrasse 23
D-6700 Ludwigshafen(DE)

(72) Erfinder: Laurer, Peter Rudolf, Dr.
Freinsheimer Strasse 33
D-6700 Ludwigshafen(DE)

(72) Erfinder: Becker, Hans-Juergen, Dr.
Raiffeisenstrasse 10
D-6701 Goennheim(DE)

(54) Verfahren zur Herstellung eines Katalysators für die Oxidation von Schwefeldioxid.

(57) Katalysatoren für die Oxidation von Schwefeldioxid zu Schwefeltrioxid, die aus einem Träger auf Basis von Kieselsäure und darauf aufgebrachter aktiver Substanz aus Vanadium- und Alkalimetallverbindungen bestehen, werden hergestellt durch

a) Lösen von Vanadiumpentoxid in wäßrigen Lösungen von Kaliumhydroxid unter Einhaltung eines Molverhältnisses $V_2O_5 : K_2O$ von 0,2 bis 0,8

b) Ansäuern der Lösung mit Schwefelsäure auf einen pH-Wert < 4

c) Verarbeiten der erhaltenen Suspension mit einem Träger auf Basis Kieselsäure

d) Verformen und Trocknen der Masse und

e) Tempern bei Temperaturen von 450 bis 650°C.

EP 0 019 174 A2

BASF Aktiengesellschaft                    O. Z. 0050/033860

## Verfahren zur Herstellung eines Katalysators für die Oxidation von Schwefeldioxid

Zur Schwefelsäureherstellung in technischem Maßstab wird Schwefeldioxid in Gegenwart von Katalysatoren mit Sauerstoff bzw. sauerstoffhaltigen Gasen zu Schwefeltrioxid oxidiert und dieses anschließend mit Wasser zu Schwefelsäure umgesetzt. Für die Oxidation des Schwefeldioxids werden insbesondere Vanadiumoxid enthaltende Katalysatoren eingesetzt. Diese Katalysatoren bestehen im allgemeinen aus auf Trägersubstanzen, insbesondere amorphen Kieselsäuren, aufgebrachtem Vanadiumpentoxid, wobei zur Aktivierung Alkalimetallverbindungen zugesetzt werden.

Zur Herstellung solcher Katalysatoren sind bereits zalreiche Verfahren bekannt geworden. Gemäß der DE-PS 1 086 218 bringt man beispielsweise eine gelöste oder suspendierte Verbindung des vier- oder fünfwertigen Vanadiums mit einer wäßrigen Silikatlösung in Berührung und arbeitet in den eine Vanadiumverbindung und Kieselsäure enthaltenden Niederschlag, der sowohl Kalium- als auch Natriumverbindungen enthält, Kieselgur ein. Das erhaltene Produkt wird vor dem Calcinieren mit Schwefelsäure behandelt.

Gemäß der DE-PS 1 091 547 geht man von einem frisch gefällten Natrium- und/oder Kaliumionen enthaltenden Kieselsäuregel aus und imprägniert dieses mit einem ebenfalls frisch ausgefällten Natrium- und/oder Kaliumionen enthaltenden Vanadiumpentoxid. Nach dem Trocknen wird das Produkt mit Schwefelsäure in Berührung gebracht und vor der Verwendung calciniert.

Ki/Fe

Schließlich ist es auch bekannt (Referat Chem. Ztr. Bl. 1963, S. 5761) bei der Herstellung von Schwefelsäure-Katalysatoren von einem Gemisch aus Vanadiumpentoxid und Kaliumbisulfat auszugehen, dieses auf 300 bis $400^{o}C$ zu erhitzen, das pulverisierte Gemisch mit Kieselgur und wenig Wasser zu verkneten und die getrocknete Paste bei 400 bis $800^{o}C$ zu calcinieren. Anstelle von Kaliumbisulfat kann man auch $K_2S_2O_7$, $K_2S_2O_8$ oder $K_2SO_4 + xH_2SO_4$ einsetzen.

Alle beschriebenen Verfahren sollen dazu dienen, einen sowohl bei hohen als auch bei tiefen Temperaturen hochaktiven Katalysator herzustellen, wobei die Aktivität in erster Linie von der Zusammensetzung der Aktivkomponente, deren Menge und der Porosität des fertigen Kontakts abhängen.

Darüber hinaus muß jedoch der Katalysatorformling äußerst widerstandsfähig gegen mechanische Beanspruchung beim Transport vom Hersteller zum Anwender, bei der Einfüllung in den Reaktor und nicht zuletzt beim Betrieb selbst sein, das heißt, der Formling muß eine hohe Festigkeit und geringen Abrieb haben.

Es ist bekannt (Sulphur 138, September/Oktober 1978, Seite 39), daß bei den auf dem Markt erhältlichen Katalysatoren mechanische Robustheit und hohe Aktivitätswerte einander oft entgegenlaufen. So bringen normalerweise hohe Porositätswerte, die für hohe Aktivitäten unerläßlich sind, hohe Abriebswerte und geringe Härten mit sich.

Der vorliegenden Erfindung lag daher die Aufgabe zugrunde, ein Verfahren zur Herstellung eines Katalysators für die Oxidation von Schwefeldioxid zu Schwefeltrioxid bestehend aus einem Träger auf Basis von Kieselsäure und darauf aufgebrachter aktiver Substanz enthaltend Vanadium- und Al-

BAD ORIGINAL

kalimetallverbindungen anzugeben, wobei ein Katalysator erhalten wird, der sowohl den an ihn gestellten Anforderungen hinsichtlich Aktivität als auch hinsichtlich Abriebsfestigkeit Genüge leistet.

Es wurde gefunden, daß diese Aufgabe dadurch gelöst werden kann, daß man

a) Vanadiumpentoxid in solchen Mengen von wässerigen Lösungen von Kaliumhydroxid löst, daß das Molverhältnis in der Lösung $V_2O_5:K_2O$ von 0,2 bis 0,8 beträgt,

b) die erhaltene Lösung mit Schwefelsäure auf einen pH-wert $<4$ ansäuert, und die erhaltene Suspension

c) unmittelbar anschließend mit einem Träger auf Basis von Kieselsäure zu einer pastösen Masse verarbeitet, mit der Maßgabe, daß das Molverhältnis $SiO_2:V_2O_5$ von 13,0 bis 45,0 beträgt,

d) die Masse verformt und trocknet und

e) bei Temperaturen von 450 bis 650°C tempert.

Zur Erzielung aktiver und gleichzeitig abriebfester Katalysatoren ist die Einhaltung der oben genannten Verfahrensschritte unbedingt erforderlich. Wesentlich ist, daß die in a) erhaltene Lösung mit soviel Schwefelsäure versetzt wird, daß eine saure Suspension erzielt wird, und daß die erhaltene saure Suspension unmittelbar anschließend mit dem Träger auf Basis Kieselsäure verarbeitet wird. Vorzugsweise säuert man die Lösung auf pH-Werte $<2$ an.

Zum Lösen des Vanadiumpentoxides setzt man zweckmäßig möglichst konzentrierte wässerige Lösungen von Kaliumhydroxid ein, z.B. mit Konzentrationen von 40 bis 50 Gew.%. Die Lösungen werden mit Schwefelsäure angesäuert, deren Konzentration beispielsweise 20 bis 40 Gew.% beträgt. Durch die Neutralisationswärme wird das Reaktionsgemisch in erwünschter Weise auf 50 bis 100°C erwärmt.

Als Träger auf Basis von Kieselsäure setzt man vorzugsweise amorphe Kieselsäuren, z.B. Kieselgur oder synthetisch hergestelltes Kieselgel ein.

Arbeitet man in den oben genannten Konzentrationsbereichen bei der Herstellung der Suspensionen, so erhält man bei der Einarbeitung von amorpher Kieselsäure eine pastöse Masse, die sofort durch Verformen, z.B. Extrudieren, weiter verarbeitet werden kann.

Es ist zweckmäßig, nach dem Einarbeiten der Kieselsäure der Masse noch eine geringe Menge, z.B. 2 bis 4 Gew.% eines Feststoffes zuzusetzen, der bei der nachfolgenden Temperung sich rückstandslos verflüchtigt bzw. zersetzt, z.B. Stärke oder Schwefel.

Nach dem Verkneten wird die Masse, z.B. durch Extrudieren, verformt, bei 100 bis 150°C getrocknet und dann bei 450 bis 650°C getempert. Die Temperbehandlung beträgt in der Regel 30 bis 120 Minuten.

Zum Lösen des Vanadiumpentoxides kann man auch anstelle von Kalilauge Gemische von Kalilauge und Natronlauge einsetzen. Die Natronlauge kann in solchen Mengen eingesetzt werden, daß das Molverhältnis $V_2O_5 : Na_2O$ bis zu 15,5 beträgt. Als Bewertungskriterien für die Güte des Katalysators sind in den Beispielen die Schneidehärte und Abrieb als Maß für mechanische Eigenschaften und die Porosität als Maß für katalytische Eigenschaften genannt. Zur Bestimmung der Daten geht man folgendermaßen vor:

0019174

a) Bestimmung der Schneidehärte

An einer abwärts fahrbaren Traverse ist ein Stempel mit angesetzter 0,3 mm-Schneide befestigt. Die Traverse wird mittels Elektromotor mit einer konstanten Geschwindigkeit von 14 mm/Minute nach unten bewegt und die Schneide senkrecht zur Längsachse eines Strangpreßlings aufsetzen gelassen. Mittels eines Dehnungsmeßstreifens wird die Kraft gemessen, die zur Durchtrennung des Strangpreßlings erforderlich ist.

Insgesamt werden 25 Strangpreßlinge mit der Schneide durchgetrennt und die Kraft registriert und gemittelt.

b) Bestimmung des Abriebes

Die Probe wird über ein 2 mm-Sieb abgesiebt. 100 g werden in einen 1-Liter-Behälter eingewogen. Dazu werden 30 g Porzellankugeln (10 bis 11 mm Durchmesser, 1,7 bis 2,0 g Gewicht) gegeben. Der Behälter wird verschlossen und 2 Stunden auf einer Schwingmühle mit 1 400 Umdrehungen/Min. bewegt. Der Katalysator wird danach über ein 2 mm-Sieb abgesiebt. Der Gewichtsunterschied ergibt den Abrieb.

c) Bestimmung der Porosität

20 g der Probe werden in einem 100 ml Becherglas mit Toluol überschichtet und mit einem Uhrglas abgedeckt. Nach 10 bis 15 Minuten wird das Toluol abgegossen und die Probe zurückgewogen.

$$\text{Porosität in cm}^3/\text{g} = \frac{(\text{Gewicht der feuchten Probe} - 20) \times 5}{100 \times 0,86}$$

0019174

## Beispiel 1

13,64 kg Vanadinpentoxid (74,9 Mol) werden mit 29 kg Kaliumhydroxid (516,8 Mol) in Form einer wässerigen 48 Gew.%-igen Lösung gelöst und die Lösung anschließend mit 119 l 33 gew.%iger Schwefelsäure versetzt. Der pH-Wert der erhaltenen Lösung liegt bei 1. Unmittelbar anschließend wird die Suspension mit 184 kg Kieselgur (2 786 Mol $SiO_2$) zu einer pastösen homogenen Mischung verknetet und anschließend zu Strängen mit einem Durchmesser von 6 mm extrudiert. Die Stränge werden bei 130°C getrocknet, zerteilt und bei Temperaturen von 600°C (A) bzw. 800°C (B) getempert. Die Eigenschaften der erhaltenen Produkte sind in der folgenden Tabelle zusammengestellt.

| Probe | Tempertemperatur °C | Schneidhärte (kp) | Porosität ($cm^3$/g) |
|-------|---------------------|-------------------|----------------------|
| 1 A   | 600                 | 9,2               | 0,51                 |
| 1 B   | 800                 | 4,5               | 0,42                 |

Aus der Tabelle ist zu ersehen, daß ein erfindungsgemäß hergestellter Katalysator mehr als die doppelte Schneidhärte besitzt gegenüber einem Katalysator der nicht bei den erfindungsgemäßen Temperaturen getempert worden ist. Die Porosität der erfindungsgemäß hergestellten Probe ist um etwa 20 % höher als diejenige der Vergleichsprobe.

## Beispiel 2

A)    22,1 kg Vanadiumpentoxid (121,5 Mol) werden in 28 kg 25 gew.%iger Natronlauge (175 Mol NaOH) und 74,8 kg

0019174

48 gew.%iger Kalilauge (630 Mol KOH) gelöst und dann mit 150 l 33 gew.%iger Schwefelsäure auf einen pH-Wert von 1,5 angesäuert. Die erhaltene Säure suspension wird unmittelbar anschließend mit 180 kg Kieselgur (2726 Mol $SiO_2$) zu einer pastösen Masse verknetet, die wie in Beispiel 1 beschrieben, weiterverarbeitet wird. Jedoch werden die zerteilten Stränge bei 550°C getempert.

B)  Man arbeitet wie unter 2 A angegeben, jedoch mit dem Unterschied, daß nur 70 l 33 gew.%iger Schwefelsäure zugesetzt werden, wodurch der pH-Wert nur 5 erreicht.

In der folgenden Tabelle sind die Eigenschaften der beiden Proben aufgeführt.

|       | pH  | Schneidhärte (kp) | Porosität ($cm^3/g$) |
|-------|-----|-------------------|----------------------|
| 2 A   | 1,5 | 7,0               | 0,52                 |
| 2 B   | 5,0 | 4,8               | 0,41                 |

Auch hier ist zu ersehen, daß die unter den erfindungsgemäßen Bedingungen hergestellte Probe bei höherer mechanischer Stabilität auch eine - ausgedrückt durch die größere Porosität - höhere Aktivität aufweist.

Beispiel 3

A)  Eine Suspension, hergestellt durch Lösen von 137 kg $V_2O_5$ (75,3 Mol) in 18 kg 25 gew.%iger NaOH (112,5 Mol) und 42 kg 48 gew.%iger KOH (359,3 Mol) und anschließendem Ansäuern mit 33 gew.%iger Schwefelsäure auf pH 6,0 wird mit 180 kg Kieselsäure (2726 Mol) zu einer pastösen Masse verknetet und wie in Beispiel 1 beschrieben

BAD ORIGINAL

weiterverarbeitet. Die Tempertemperatur bei der Temperung beträgt 550°C.

B) Es wird wie in Beispiel 3A beschrieben verfahren, jedoch mit dem Unterschied, daß mit Schwefelsäure ein pH-Wert von 1,5 eingestellt wird.

In der folgenden Tabelle sind wiederum die Eigenschaften der beiden Produkte einander gegenübergestellt.

|  | pH | Schneidhärte (kp) | Porosität ($cm^3$/g) | Abrieb (%) |
|---|---|---|---|---|
| 3 A | 6,0 | 2,3 | 0,43 | 10,0 |
| 3 B | 1,5 | 5,3 | 0,48 | 1,1 |

Auch aus dieser Tabelle ist zu ersehen, daß die Schneidhärte der unter den erfindungsgemäßen Bedingungen hergestellten Probe 3 B größer ist als diejenige der Probe 3 A bei gleichzeitig höherer Porosität. Im Vergleich zur Vergleichsprobe 3A weist die erfindungsgemäß hergestellte Probe 3B einen wesentlich tieferen Abriebswert auf.

Patentansprüche

1. Verfahren zur Herstellung eines Katalysators für die Oxidation von Schwefeldioxid zu Schwefeltrioxid, bestehend aus einem Träger auf Basis von Kieselsäure und darauf aufgebrachter aktiver Substanz enthaltend Vanadium- und Alkalimetallverbindungen, dadurch gekennzeichnet, daß man

a) Vanadiumpentoxid in solchen Mengen von wässerigen Lösungen von Kaliumhydroxid löst, daß das Molverhältnis in der Lösung $V_2O_5:K_2O$ von 0,2 bis 0,8 beträgt,

b) die erhaltene Lösung mit Schwefelsäure auf einen pH-Wert $< 4$ ansäuert, und die erhaltene Suspension

c) unmittelbar anschließend mit einem Träger auf Basis von Kieselsäure zu einer pastösen Masse verarbeitet, mit der Maßgabe, daß das Molverhältnis $SiO_2:V_2O_5$ von 13,0 bis 45,0 beträgt

d) die Masse verformt und trocknet und

e) bei Temperaturen von 450 bis 650°C tempert.

2. Verfahren nach Anspruch 1, dadurch gekennzeichnet, daß man das Vanadiumpentoxid in Gemischen von Natron- und Kalilauge löst, mit der Maßgabe, daß das Molverhältnis $V_2O_5:Na_2O$ in der Lösung bis 15,5 beträgt.

BAD ORIGINAL

3.    Verfahren nach Ansprüchen 1 bis 2, <u>dadurch gekenn-</u>
<u>zeichnet</u>, daß man der pastösen Masse Feststoffe zu-
setzt, die sich bei der nachfolgenden Temperung verflüchtigen bzw. zersetzen.